# EUROPÄISCHE PATENTANMELDUNG

(11) **EP 2 447 181 A1**
(43) Veröffentlichungstag der Anmeldung: **02.05.2012**
(21) Anmeldenummer: 11007761.7
(22) Anmeldetag: 23.09.2011
(51) Int. Cl.: B65D 51/28, B65D 81/32, B65D 43/02

(54) **Speisenbehälter mit Deckelabteilen**

(30) Priorität: 02.11.2010 DE 202010014866 U
(71) Anmelder: Schwenk, Lars, 20148 Hamburg (DE); Jürgens, Sascha, 22087 Hamburg (DE)
(72) Erfinder: Schwenk, Lars, 20148 Hamburg (DE); Jürgens, Sascha, 22087 Hamburg (DE)
(74) Vertreter: Hauck Patent- und Rechtsanwälte

(57) **Zusammenfassung**

Speisenbehälter (1), insbesondere für Suppen, Salate oder einen anderen Nahrungsmittelgrundbestandteil und zugehörige Zutaten mit einem unteren, topfartigen Behälter (2), der oben eine umlaufende untere Siegelfläche (6) und einen radial nach außen vorstehenden Schnapprand (7) aufweist, und einem oberen Behälter (3), der eine umlaufende obere Seitenwand (11) aufweist, die am unteren Rand einen umlaufenden Flansch (13) zum Aufschnappen auf den Schnapprand (7) des unteren Behälters (2) aufweist und mindestens ein von oben zugängliches Abteil (4) umschließt, wobei am oberen Rand der oberen Seitenwand eine um das Abteil umlaufende obere Siegelfläche (16,16.1) angeordnet ist.

## Beschreibung

Die Erfindung bezieht sich auf einen Speisenbehälter insbesondere für Suppen, Salate oder einen anderen Nahrungsmittelgrundbestandtteil und Zutaten.

Aus der JP 2001 348 074 A ist ein Nudelbehälter bekannt, der gekochte Nudeln und Nudelsuppe aufbewahrt. Der Behälter ist in der Lage, das Hochspritzen von Nudelsuppe beim Eingeben der Nudeln in die Suppe und ein Berühren der Nudeln mit der Hand zu vermeiden. Der Nudelbehälter weist einen Hauptbehälter auf, in dem Nudelsuppe angeordnet ist. Ein Tray ist auf den oberen Rand des Hauptbehälters aufgesetzt und greift in die obere Öffnung des Hauptbehälters ein. Das Tray hat eine Öffnung, die durch eine Trennplatte verschlossen ist. Die Nudeln sind auf der Trennplatte angeordnet. Sie können durch Entfernen der Trennplatte durch die Öffnung in die Suppe gegeben werden. Oben ist das Tray durch einen Deckel geschlossen. Der Nudelbehälter ist für den Verkauf durch Fastfood- und kleine Gastronomie-Betriebe gedacht. Der Nudelbehälter ist für den Sofortverzehr der enthaltenen Nudelspeisen bestimmt. Die Nudelspeisen sind nicht vor Verderb bei längeren Aufbewahrungszeiten geschützt. Falls der Nudelbehälter gekippt wird, kann Suppe auslaufen. Dies ist leicht möglich, wenn der Nudelbehälter mit anderen Waren in eine Einkaufstasche gepackt wird. Infolgedessen ist der Nudelbehälter nicht für den Vertrieb über den Einzelhandel geeignet.

Davon ausgehend liegt der Erfindung die Aufgabe zugrunde, einen Speisenbehälter insbesondere für Suppen, Salate oder einen anderen Nahrungsmittelgrundbestandteil und Zutaten zur Verfügung zu stellen, der verschüttsicher ist und die Speisen über einen längeren Zeitraum vor Verderb schützt.

Der erfindungsgemäße Speisenbehälter insbesondere für Suppen, Salate oder einen anderen Nahrungsmittelgrundbestandteil und Zutaten hat:
- einen unteren, topfartigen Behälter, der oben eine umlaufende untere Siegelfläche und einen radial nach außen vorstehenden Schnapprand aufweist, und
- einen oberen Behälter, der eine umlaufende obere Seitenwand aufweist, die am unteren Rand einen umlaufenden Flansch zum Aufschnappen auf den Schnapprand des unteren Behälters aufweist und mindestens ein von oben zugängliches Abteil umschließt, wobei am oberen Rand der oberen Seitenwand eine um das Abteil umlaufende obere Siegelfläche angeordnet ist.

Auf die untere Siegelfläche des unteren Behälters und auf die obere Siegelfläche des oberen Behälters ist ein siegelbares Siegelelement aufsiegelbar. Hierbei kann es sich beispielsweise um eine Siegelfolie, ein aufsiegelbares Flachmaterial oder um einen aufsiegelbaren Deckel handeln. Hierdurch werden der untere Behälter und der obere Behälter dicht abgeschlossen. Das Austreten von Flüssigkeit beim Kippen des Speisenbehälters kann hierdurch vermieden werden. Die Versiegelung des unteren und des oberen Behälters kann gasdicht sein, so dass kein Luftaustausch mit der Umgebung möglich ist und eingefüllte Speisen vor Verderb geschützt sind. Es ist möglich, lediglich den unteren oder den oberen Behälter zu versiegeln, je nachdem, welche Speisen bzw. Speisenbestandteile dort jeweils eingefüllt sind. Bevorzugt sind der untere und der obere Behälter versiegelt. Auch ist es möglich, den Speisenbehälter unversiegelt zu benutzen. Je nach Bedarf kann eine dichte Versiegelung erfolgen oder nicht, so dass ein vielseitiger Speisenbehälter für verschiedene Einsatzzwecke bereit gestellt wird. Der Speisenbehälter mit versiegeltem unterem Behälter und/oder oberem Behälter eignet sich insbesondere für den Vertrieb über den Einzelhandel, da ein Auslaufen von Flüssigkeit bzw. flüssiger Nahrung und ein Verderb der Speisen und Speisenbestandteilewirksam verhindert wird.

Gemäß einer Ausgestaltung ist das mindestens eine Abteil des oberen Behälters auf demselben Niveau oder höher als die untere Siegelfläche angeordnet, wenn der obere Behälter auf den unteren Behälter aufgeschnappt ist. Infolgedessen ragt das Abteil nicht oder nicht so tief in den unteren Behälter hinein, dass es die Anbringung einer Siegelfolie oder eines siegelbaren Flachmaterials auf der unteren Siegelfläche verhindert. Falls eine dehnbare Siegelfolie zum Einsatz kommt, kann sich das Abteil auch unter dem Niveau der unteren Siegelfläche erstrecken, da es die Siegelfolie etwas nach unten auswölben kann.

Gemäß einer Ausgestaltung ist auf die untere Siegelfläche ein siegelbares Flachmaterial aufgesiegelt und/oder ist auf die obere Siegelfläche ein siegelbares Flachmaterial aufgesiegelt. Gemäß einer weiteren Ausgestaltung ist das auf die untere Siegelfläche aufgesiegelte untere siegelbare Flachmaterial und/oder das auf die obere Siegelfläche aufgesiegelte obere siegelbare Flachmaterial eine Siegelfolie.

Gemäß einer Ausgestaltung weist der obere Behälter am unteren Rand der umlaufenden oberen Seitenwand eine umlaufende Auflagefläche auf und ist am äußeren Rand der umlaufenden Auflagefläche der umlaufende Flansch angeordnet. Der obere Behälter ist über die umlaufende Auflagefläche auf dem unteren Behälter abgestützt. Hierdurch wird die Schnappverbindung zwischen oberem Behälter und unterem Behälter entlastet. Eine auf den oberen Behälter ausgeübte Kraft kann weniger leicht zum Lösen der Schnappverbindung führen. Auch bei dieser Ausgestaltung kann auf die untere Siegelfläche eine Siegelfolie oder ein anderes Siegelelement aufgesiegelt sein. Gemäß einer anderen Ausgestaltung ist die Auflagefläche direkt auf die untere Siegelfläche des unteren Behälters aufgesiegelt. Bei dieser Ausgestaltung wird der untere Behälter durch den aufgesiegelten oberen Behälter dicht abgeschlossen.

Gemäß einer Ausgestaltung hat der obere Behälter mehrere von oben zugängliche Abteile, die durch mindestens eine Trennwand voneinander getrennt sind. Hierdurch ist es möglich, verschiedene Nahrungsmittelbestandteile bzw. Zutaten getrennt voneinander im oberen Behälter aufzubewahren. Eine Vermischung von Zutaten bzw. Aromen wird hierdurch vermieden.

Gemäß einer weiteren Ausgestaltung weist der untere Behälter außen diametral einander gegenüberliegende Abflachungen oder Einwölbungen auf. Die Abflachungen oder Einwölbungen erleichtern das sichere Greifen des unteren Behälters und das Abnehmen des Deckels bzw. Öffnen der Versiegelung.

Gemäß einer weiteren Ausgestaltung weist der obere Behälter eine kegelstumpfförmige obere Seitenwand auf. Hierdurch wird dem oberen Behälter insbesondere ein besonders ansprechendes Aussehen verliehen. Gemäß einer weiteren Ausgestaltung weist die obere Seitenwand des oberen Behälters zumindest in Umfangsabschnitten vertikal erstreckte Riffelungen auf. Die Riffelungen erleichtern das Greifen und Abnehmen des oberen Behälters.

Gemäß einer weiteren Ausgestaltung weist die untere Siegelfläche und/oder die obere Siegelfläche eine Breite von mindestens zwei Millimetern und/oder von maximal zehn Millimetern auf. Diese Abmessungen sind für ein Versiegeln besonders gut geeignet. Gemäß einer bevorzugten Ausgestaltung weisen der untere Siegelrand und/oder der obere Siegelrand eine Breite von mindestens drei Millimetern und/oder von maximal sechs Millimetern auf.

Gemäß einer Ausgestaltung besteht der untere Behälter und/oder der obere Behälter aus Kunststoff und/oder aus mit Kunststoff kaschiertem Karton. Kunststoff eignet sich besonders zum Versiegeln. Mit Kunststoff kaschierter Karton ist für die Aufnahme von Nahrungsmitteln geeignet. Hierfür ist der Kunststoff bevorzugt an der Innenseite des unteren Behälters und/oder des oberen Behälters angeordnet. Im Bereich der unteren und/oder der oberen Siegelfläche kann die Kunststoffkaschierung zum Versiegeln genutzt werden.

Gemäß einer weiteren Ausgestaltung besteht der untere Behälter aus PET (Polyethylenterephthalat) oder CPET (kristallines PET) oder APET (amorphes PET) und/oder der obere Behälter aus PE (Polyethylen) oder PP (Polypropylen) oder CPET oder APET.

Gemäß einer weiteren Ausgestaltung ist der untere Behälter mit Suppe oder Salat gefüllt und/oder der obere Behälter mit Fleisch und/oder Fisch und/oder Gemüse und/oder Obst und/oder Käse und/oder Gewürzen und/oder Soße und/oder Brotwaren und/oder Backwaren und/oder Teigwaren gefüllt.

Die Erfindung wird nachfolgend anhand der anliegenden Zeichnungen eines Ausführungsbeispieles näher erläutert. In den Zeichnungen zeigen:
- Fig. 1: den Speisenbehälter in einer Perspektivansicht schräg von oben und von der Seite;
- Fig. 2: denselben Speisenbehälter in einem Vertikalschnitt;
- Fig. 3a bis d: den unteren Behälter des Speisenbehälters in einer Perspektivansicht schräg von oben und von der Seite (Fig. 3a), in einer Seitenansicht (Fig. 3b), in einer Unteransicht (Fig. 3c) und in einem Vertikalschnitt (Fig. 3d);
- Fig. 4a bis d: den oberen Behälter des Speisenbehälters in einer Perspektivansicht schräg von oben und von der Seite (Fig. 4a), in einer Seitenansicht (Fig. 4b), in einer Draufsicht (Fig. 4c) und in einem Vertikalschnitt (Fig. 4d);
- Fig 5a bis e: eine andere Ausführungsform des unteren Behälters des Speisenbehälters in einer Perspektivansicht schräg von oben und von der Seite (Fig. 5a), in einer Seitenansicht (Fig. 5b), in einer Draufsicht (Fig. 5c), in einem Vertikalschnitt (Fig. 5d) und in einem vergrößerten Detail A von Fig. 5d (Fig. 5e).

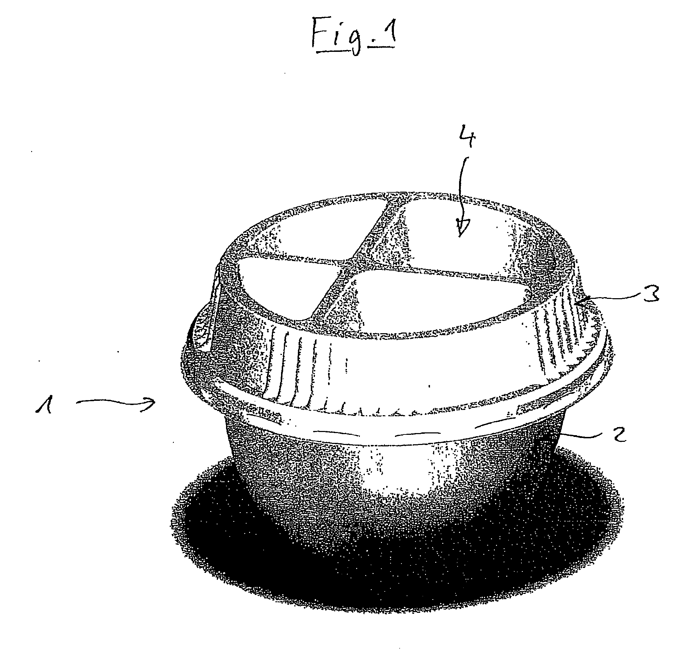

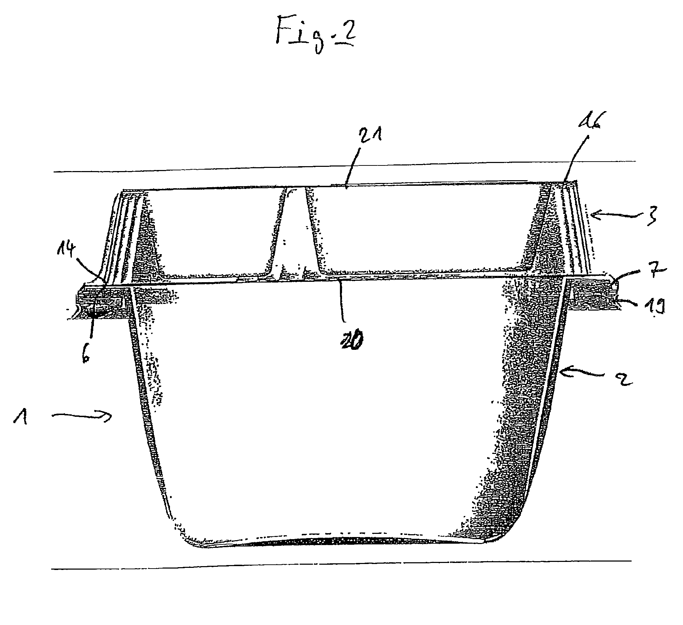

Gemäß Fig. 1 und 2 weist der erfindungsgemäße Speisenbehälter 1 einen unteren, topfartigen Behälter 2 und einen oberen Behälter 3 mit vier Abteilen 4 auf.

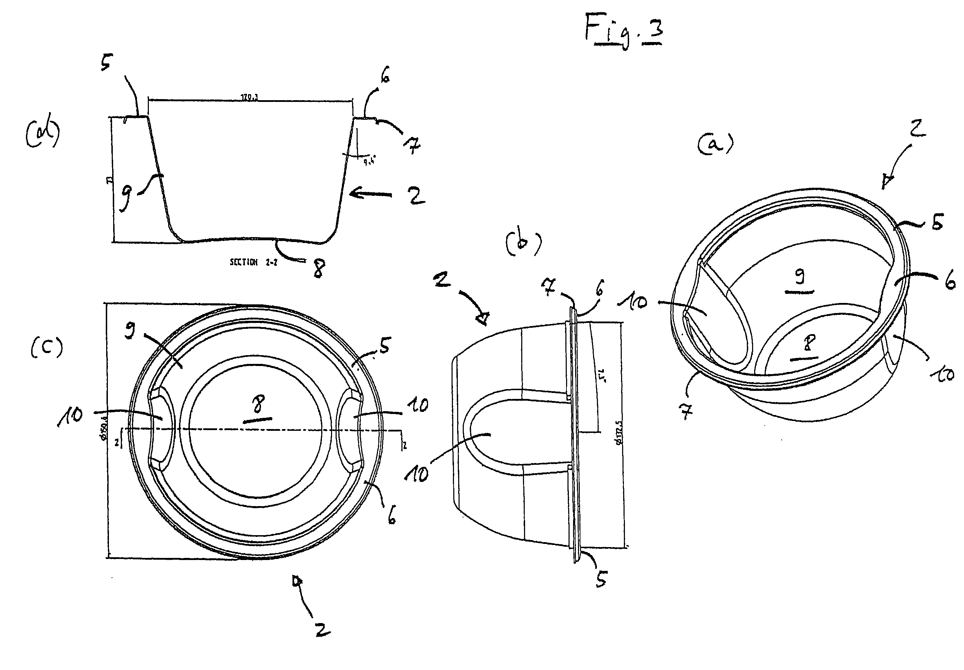

Gemäß Fig. 3 hat der untere Behälter 2 oben einen nach außen vorstehenden Rand 5, auf dem oben eine umlaufende, ebene untere Siegelfläche 6 angeordnet ist und der am äußeren Umfang mit einem nach unten schürzenartig abgewinkelten Schnapprand 7 versehen ist.

Der untere Behälter 2 weist einen leicht nach innen gewölbten Boden 8 auf, der über einen Radius in eine konisch nach oben ausgestellte, umlaufende untere Seitenwand 9 übergeht. Die untere Seitenwand 9 weist einander diametral gegenüber liegende Abflachungen oder Einwölbungen 10 auf.

Der untere Behälter 2 ist aus CPET hergestellt.

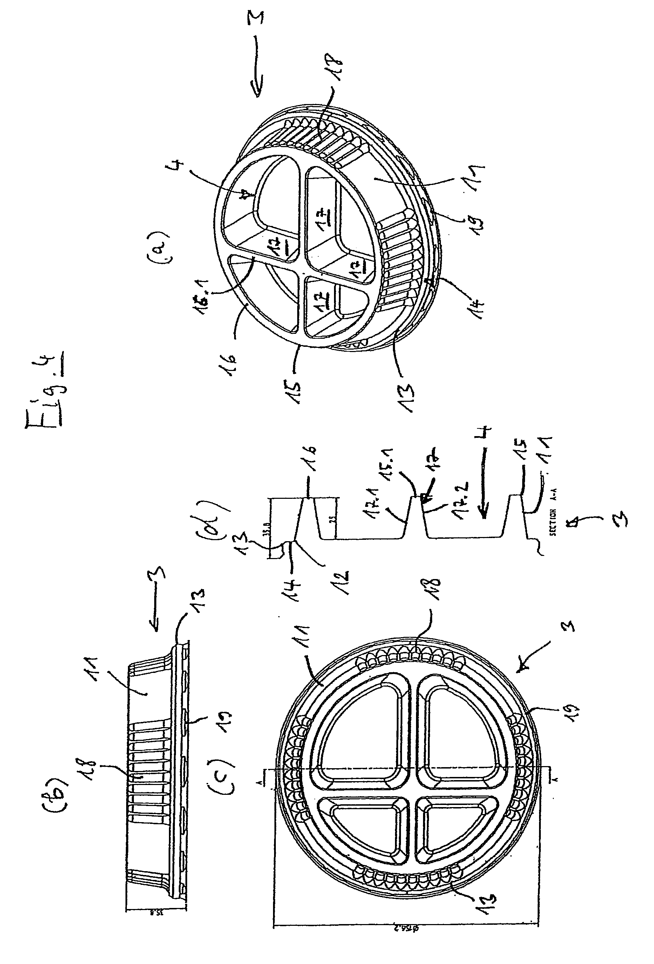

Gemäß Fig. 4 hat der obere Behälter 3 eine kegelstumpfförmig umlaufende obere Seitenwand 11, von der am unteren Rand 12 ein umlaufender, schürzenartiger Flansch 13 zum Aufschnappen auf den Schnapprand 7 des unteren Behälters 2 vorsteht. Zwischen dem unteren Rand der oberen Seitenwand und der Schürze ist eine umlaufende Auflagefläche 14 vorhanden, die sich in einer Ebene erstreckt.

Am oberen Rand 15 der oberen Seitenwand 11 des oberen Behälters 3 ist eine umlaufende obere Siegelfläche 16 angeordnet, die sich in einer Ebene erstreckt.

Die obere Siegelfläche 16 ist vom oberen Rand 15 nach innen gerichtet. An die obere Siegelfläche 16 grenzen die Abteile 4 an, die von der oberen Seitenwand 11 umschlossen sind. Die Abteile 4 sind voneinander durch Trennwände 17 getrennt. Die Trennwände 17 sind hohl, so dass sie jeweils aus zwei nebeneinander angeordneten Trennwandabschnitten 17.1, 17.2 bestehen. Oben sind diese Trennwandabschnitte 17.1, 17.2 mit weiteren oberen Siegelflächen 16.1 verbunden, die vom Rand der umlaufenden oberen Siegelfläche 16 ausgehen. Zur Unterseite des oberen Behälters 3 hin sind die hohlen Trennwände 17 geöffnet.

Die obere Seitenwand 11 weist außen in Abschnitten Riffelungen 18 auf.

Ferner ist der Flansch 13 am Umfang umlaufend mit einer Vielzahl Eindellungen 19 versehen, die über den Schnapprand 7 des unteren Behälters 2 schnappbar sind.

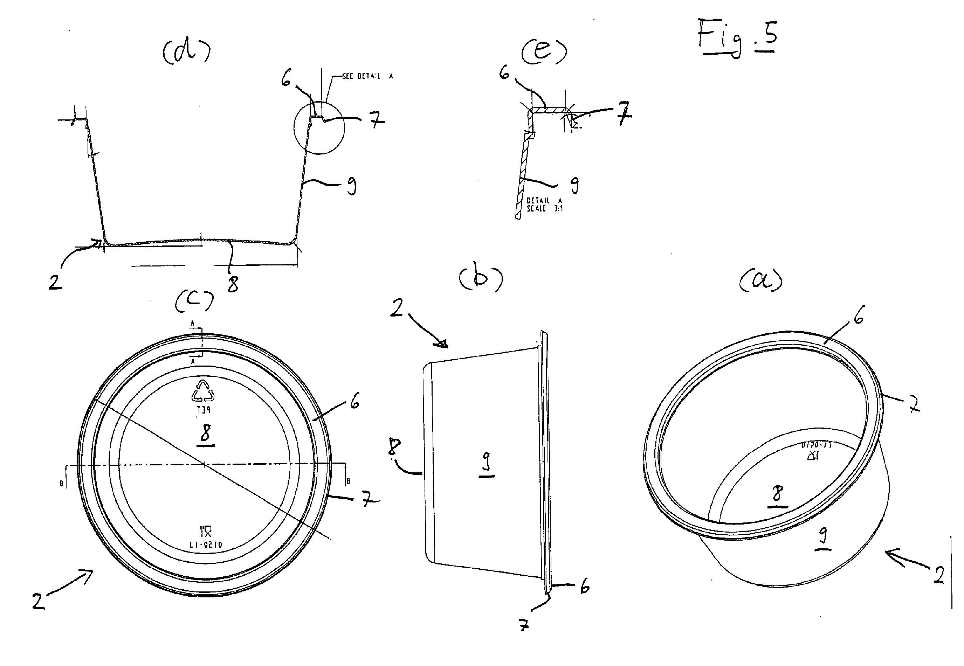

Gemäß Fig. 1 und 2 ist der obere Behälter 3 auf dem unteren Behälter 2 aufgesetzt, so dass die Auflagefläche 14 auf der unteren Siegelfläche 6 aufsitzt. Die Eindellungen 19 untergreifen den Schnapprand 7, wodurch der obere Behälter 3 am unteren Behälter 2 gesichert wird. Auf die untere Siegelfläche 6 ist eine untere Siegelfolie 20 aufsiegelbar, um den unteren Behälter 2 dicht zu verschließen. Auf die obere Siegelfläche 16 ist eine obere Siegelfolie 21 aufsiegelbar, um den oberen Behälter 3 abzudichten. Hierdurch kann beispielsweise eine in den unteren Behälter 2 eingefüllte Suppe gegen Verschütten und Verderb geschützt werden. Entsprechend werden in die Abteile 4 des oberen Behälters eingefüllte Zutaten (frisches Gemüse, gegartes Fleisch, Brotwaren, Soße) vor einem Verschütten und Verderb geschützt. Fig. 5 zeigt ein weiteres Ausführungsbeispiel des unteren Behälters 2, das mit denselben Bezugsziffern wie das anhand der Fig. 1 bis 5 beschriebene Ausführungsbeispiel des unteren Behälters 2 versehen ist. Im Unterschied zu dem Ausführungsbeispiel des unteren Behälters von Fig. 1 bis 3, hat der untere Behälter 2 gemäß Fig. 5 eine kegelstumpfförmige, umlaufende untere Seitenwand 9. Die untere Seitenwand 9 verjüngt sich von der ebenen unteren Siegelfläche 6 nach unten zum Boden 8 hin.

Die untere Siegelfläche 6 ist ebenfalls mit einem nach unten schürzenartig abgewinkelten Schnapprand 7 versehen.

Der untere Behälter 2 von Fig. 5 wird beispielsweise aus CPET oder PET hergestellt. Er wird vorzugsweise mit dem zuvor beschriebenen oberen Behälter 3 in der oben beschriebenen Weise bestückt.

## Patentansprüche

1. Speisenbehälter insbesondere für Suppen, Salate oder einen anderen Nahrungsmittelgrundbestandteil und zugehörige Zutaten mit
- einem unteren, topfartigen Behälter (2), der oben eine umlaufende untere Siegelfläche (6) und einen radial nach außen vorstehenden Schnapprand (7) aufweist, und
- einem oberen Behälter (3), der eine umlaufende obere Seitenwand (11) aufweist, die am unteren Rand (12) einen umlaufenden Flansch (13) zum Aufschnappen auf den Schnapprand (7) des unteren Behälters (2) aufweist und mindestens ein von oben zugängliches Abteil (4) umschließt, wobei am oberen Rand der oberen Seitenwand (11) eine um das Abteil (4) umlaufende obere Siegelfläche (16) angeordnet ist.

2. Behälter nach Anspruch 1, bei dem das mindestens eine Abteil (4) des oberen Behälters (3) auf demselben Niveau oder höher als die untere Siegelfläche (6) angeordnet ist, wenn der obere Behälter (3) auf den unteren Behälter (2) aufgeschnappt ist.

3. Behälter nach Anspruch 1, bei dem auf die untere Siegelfläche (6) ein siegelbares Flachmaterial (20) aufgesiegelt ist und/oder bei dem auf die obere Siegelfläche (16) ein siegelbares Flachmaterial (21) aufgesiegelt ist.

4. Behälter nach Anspruch 3, bei dem das auf die unteren Siegelfläche (6) aufgesiegelte untere siegelbare Flachmaterial (20) und/oder das auf die obere Siegelflächen (16) aufgesiegelt obere siegelbare Flachmaterial (21) eine Siegelfolie ist.

5. Behälter nach einem der Ansprüche 1 bis 4, bei dem der obere Behälter (2) am unteren Rand (12) der umlaufenden oberen Seitenwand (11) eine umlaufende Auflagefläche (14) aufweist und am äußeren Rand der umlaufenden Auflagefläche (14) der umlaufende Flansch (13) angeordnet ist.

6. Behälter nach Anspruch 5, bei dem die Auflagefläche (14) auf die untere Siegelfläche (6) des unteren Behälters aufgesiegelt ist.

7. Behälter nach einem der Ansprüche 1 bis 6, bei dem der obere Behälter (3) mehrere durch mindestens eine Trennwand (17) voneinander getrennte Abteile (4) aufweist.

8. Behälter nach einem der Ansprüche 1 bis 7, bei dem untere Behälter (2) außen diametral einander gegenüberliegende Abflachungen oder Einwölbungen (10) aufweist.

9. Behälter nach einem der Ansprüche 1 bis 8, bei dem der obere Behälter (3) eine kegelstumpfförmige obere Seitenwand (11) aufweist.

10. Behälter nach einem der Ansprüche 1 bis 9, bei dem die obere Seitenwand (11) zumindest in Umfangsabschnitten vertikal erstreckte Riffelungen (18) aufweist.

11. Behälter nach einem der Ansprüche 1 bis 10, bei dem die untere Siegelfläche (6) und/oder die obere Siegelfläche (16) eine Breite von mindestens 2 mm und/oder von maximal 10 mm aufweist.

12. Behälter nach Anspruch 11, bei dem die untere Siegelfläche (6) und/oder die obere Siegelfläche (16) eine Breite von mind. 3 mm und/oder von maximal 6 mm aufweist.

13. Behälter nach einem der Ansprüche 1 bis 12, bei dem der untere Behälter (2) und/oder der obere Behälter (3) aus Kunststoff und/oder aus mit Kunststoff kaschiertem Karton besteht.

14. Behälter nach Anspruch 12, bei dem der untere Behälter (2) aus CPET oder PET und/oder der obere Behälter (3) aus PE und/oder CPET und/oder CPE besteht.

15. Behälter nach einem der Ansprüche 1 bis 13, bei dem der untere Behälter (2) mit Suppe oder Salat gefüllt ist und/oder der obere Behälter (3) mit Fleisch und/oder Fisch und/oder Gemüse und/oder Obst und/oder Käse und/oder Gewürzen und/oder Soße und/oder Brotwaren und/oder Backwaren und/oder Teigwaren gefüllt ist.
